# EUROPEAN PATENT APPLICATION

(11) **EP 4 733 590 A1**
(43) Date of publication of application: **29.04.2026**
(21) Application number: 25208287.0
(22) Date of filing: 13.10.2025
(51) Int. Cl.: F04B 39/02, F04B 39/12, G01F 23/56

(54) **CONNECTION ASSEMBLY AND COMPRESSOR**

(30) Priority: 25.10.2024 CN 202422595587 U
(71) Applicant: Danfoss (Tianjin) Ltd., Tainjin 301700 (CN); Danfoss Commercial Compressors, 01600 Trévoux (FR)
(72) Inventor: Bonnefoi, Patrice, Nordborg (DK); Laissus, Jean-Jacques, Nordborg (DK); Streda, Gabriel, Nordborg (DK); Rosson, Yves, Nordborg (DK); Sun, Yingke, Nordborg (DK)
(74) Representative: Patentanwälte Olbricht Buchhold Keulertz

(57) **Abstract**

The present disclosure provides a connection assembly and a compressor, wherein the connection assembly is used for connecting a compressor shell and an oil level sensor. The connection assembly comprises: a liquid sight glass adapter fixed on the compressor shell; a connector and a locking fastener, wherein a first end of the connector is detachably connected to the liquid sight glass adapter, a second end of the connector is detachably connected to the locking fastener, and the connector and the locking fastener respectively abut against two opposite axial sides of an annular boss disposed around an outer periphery of the oil level sensor, wherein, the liquid sight glass adapter, the connector and the locking fastener are configured to allow the oil level sensor to pass therethrough. In this way, the connection assembly has advantages of simple assembly and disassembly, time and labor saving, and easy replacement.

## Description

### BACKGROUND OF THE INVENTION

### 1. TECHNICAL FIELD

The present disclosure relates to a field of a compressor technology, and specifically to a connection assembly and a compressor.

### 2. BACKGROUND

In order to facilitate an observation of an oil condition in a compressor, a liquid sight glass assembly is generally provided on a shell of the compressor. During use, an operator may visually observe oil in the compressor through a wide-angle liquid sight glass of the liquid sight glass assembly, so as to determine whether an amount of the oil is appropriate or whether the oil needs to be added. However, such a way using the liquid sight glass assembly requires the operator to observe frequently, which is time-consuming, labor-intensive, and cumbersome to operate. Moreover, when the amount of the oil in the compressor becomes less, timely response may not be made.

Although the prior art provides a way of detecting the oil in the compressor using an oil level sensor, the assembly of the oil level sensor on and the disassembly of the oil level sensor from the shell of the compressor are complicated, and therefore the oil level sensor may not be replaced in time when it fails.

### SUMMARY

In view of this, the present disclosure provides a connection assembly and a compressor. The connection assembly is used for connecting a compressor shell with an oil level sensor, which has advantages of simple assembly and disassembly, time and labor saving, and easy replacement.

In order to achieve the above-mentioned purpose, the present disclosure provides the following technical solutions.

There is provided a connection assembly for connecting a compressor shell with an oil level sensor, comprising:
a liquid sight glass adapter fixed on the compressor shell;
a connector and a locking fastener, wherein a first end of the connector is detachably connected to the liquid sight glass adapter, a second end of the connector is detachably connected to the locking fastener, and the connector and the locking fastener are configured to respectively abut against two opposite axial sides of an annular boss disposed around an outer periphery of the oil level sensor,
wherein the liquid sight glass adapter, the connector and the locking fastener are configured to allow the oil level sensor to pass therethrough.

Optionally, the liquid sight glass adapter has a first internal thread, the first end of the connector is provided with a first external thread, and the first internal thread is matched with the first external thread, so that the liquid sight glass adapter is threadedly connected to the connector.

Optionally, a first sealing structure is provided between the liquid sight glass adapter and the connector.

Optionally, an annular step facing the liquid sight glass adapter is provided on an outer periphery of the connector, and the first sealing structure comprises a first sealing ring abutting between the liquid sight glass adapter and the annular step.

Optionally, the second end of the connector is provided with a second external thread, the locking fastener is provided with a second internal thread, and the second external thread is matched with the second internal thread, so that the connector is threadedly connected to the locking fastener.

Optionally, an annular inner edge is provided around an inner circumferential surface of the locking fastener, and the second end of the connector and the annular inner edge are configured to clamp the annular boss of the oil level sensor between them when the connector is connected to the locking fastener.

Optionally, a second sealing structure is provided between the connector and the annular boss of the oil level sensor, and/or between the annular boss and the annular inner edge.

There is further provided a compressor, comprising a compressor shell, an oil level sensor and the connection assembly according to any one of the above.

Optionally, the oil level sensor has a mounting adapter, the annular boss is disposed around an outer circumferential surface of the mounting adapter, an outer diameter of the annular boss is greater than an inner diameter of each of the connector and the annular inner edge and less than an inner diameter of the locking fastener.

Optionally, the oil level sensor comprises a tubular element and a floating element, the tubular element is fixed to the compressor shell and at least partially disposed inside the compressor shell, the floating element is disposed inside the compressor shell and surrounds the tubular element, a calibration plane is provided on an outer periphery of the mounting adapter protruding from the locking fastener, and the calibration plane is perpendicular or parallel to a movement path of the floating element of the oil level sensor.

The connection assembly and the compressor provided by the present disclosure may realize a connection of the oil level sensor using the liquid sight glass adapter in a liquid sight glass assembly in prior art, which is beneficial to cost saving, may realize an update and iteration of a compressor in prior art, and is also beneficial to adjusting an oil detection way based on actual conditions. Moreover, the first end of the connector is detachably connected to the liquid sight glass adapter, and the second end of the connector is detachably connected to the locking fastener, so that the oil level sensor is installed and connected to the liquid sight glass adapter through the connector and the locking fastener. Since the liquid sight glass adapter is fixed on the compressor shell, an installation of the oil level sensor may be realized, which has advantages of simple assembly and disassembly, time and labor saving, and easy replacement.

### BRIEF DESCRIPTION OF THE DRAWINGS

In order to clearly describe the technical solutions in embodiments of the present disclosure or the prior art, accompanying drawings required for the description of embodiments of the present disclosure or the prior art will be briefly introduced below. Obviously, the accompanying drawings in the following descriptions are only for some of embodiments of the present disclosure. For those skilled in the art, other accompanying drawings may also be obtained according to these accompanying drawings without any creative work.
FIG. 1 shows an installation schematic diagram of a connection assembly shown according to some embodiments of the present disclosure;
FIG. 2 shows an installation cross-sectional view of a connection assembly shown according to some embodiments of the present disclosure;
FIG. 3 shows an exploded view of a connection assembly shown according to some embodiments of the present disclosure;
FIG. 4 shows a cross-sectional view of a connector shown according to some embodiments of the present disclosure;
FIG. 5 shows a cross-sectional view of a locking fastener shown according to some embodiments of the present disclosure; and
FIG. 6 shows a cross-sectional view of an oil level sensor shown according to some embodiments of the present disclosure.

### Description of Reference signs:

1: liquid sight glass adapter; 2: first sealing ring; 3: connector; 4: second sealing ring; 5: oil level sensor; 6: locking fastener; 31: first outer diameter portion; 32: second outer diameter portion; 33: third outer diameter portion; 34: annular step; 51: annular boss; 52: calibration plane; 53: floating element; 54: first tubular portion; 55: second tubular portion; 61: first inner diameter portion; 62: second inner diameter portion.

### DETAILED DESCRIPTION

The technical solutions in embodiments of the present disclosure will be clearly and completely described below with reference to the accompanying drawings in embodiments of the present disclosure. Obviously, the described embodiments are only some, but not all of embodiments of the present disclosure. Based on embodiments of the present disclosure, all other embodiments obtained by those skilled in the art without creative work fall within the scope of protection of the present disclosure.

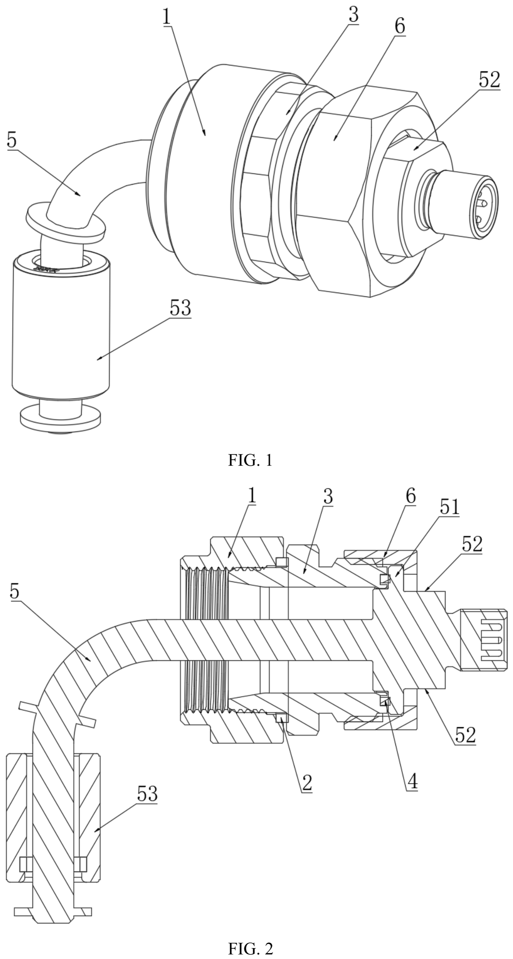

As shown in FIG. 1 to FIG. 6, embodiments of the present disclosure provide a connection assembly for connecting a compressor shell with an oil level sensor 5, comprising a liquid sight glass adapter 1, a connector 3, and a locking fastener 6. The liquid sight glass adapter 1, the connector 3, and the locking fastener 6 are all configured as cylindrical structures with hollow through-holes, so that the oil level sensor 5 may penetrate through the liquid sight glass adapter 1, the connector 3, and the locking fastener 6 via the hollow through-holes.

The liquid sight glass adapter 1 is fixed on the compressor shell. Specifically, a channel opening is provided on the compressor shell, and the liquid sight glass adapter 1 extends and is welded into the channel opening. Moreover, an inner circumferential surface of the liquid sight glass adapter 1 is provided with a first internal thread, and a first end of the connector 3 is provided with a first external thread. The first internal thread is matched with the first external thread. During connection, the connector 3 and the liquid sight glass adapter 1 are threadedly connected with each other through the first internal thread and the first external thread, thereby realizing a detachable connection between the connector 3 and the liquid sight glass adapter 1, which has advantages of simple assembly and disassembly, as well as time and labor saving.

It should be noted that the liquid sight glass adapter 1 is a part of the liquid sight glass assembly. The liquid sight glass assembly in the prior art comprises a liquid sight glass lens and a liquid sight glass adapter. The liquid sight glass lens is threadedly connected to an interior of the liquid sight glass adapter to seal the hollow through-hole of the liquid sight glass adapter, so that an operator may visually observe oil in the compressor through the liquid sight glass lens. In the solution, a connection of the oil level sensor may be realized using the liquid sight glass adapter 1 in the liquid sight glass assembly in the prior art, which is beneficial to cost saving, may realize an update and iteration of the compressor in the prior art, and is also beneficial to adjusting an oil detection way based on actual conditions.

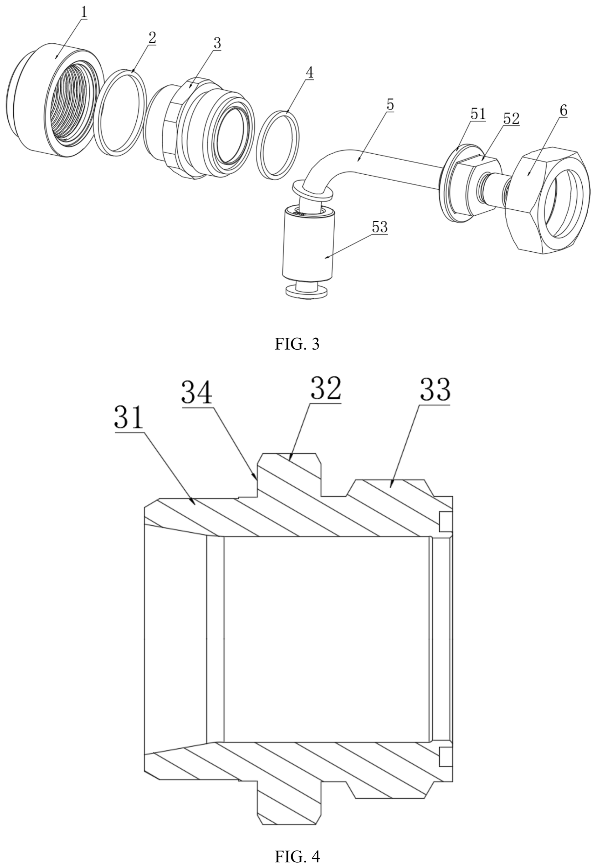

As shown in FIG. 4, the connector 3 comprises a first outer diameter portion 31, a second outer diameter portion 32, and a third outer diameter portion 33 axially arranged in sequence. The first end of the connector 3 is located close to the first outer diameter portion 31, and a second end of the connector 3 is located close to the third outer diameter portion 33. An outer periphery of the first outer diameter portion 31 is provided with a first external thread, which is matched with the first internal thread of the liquid sight glass adapter 1. An outer diameter of the second outer diameter portion 32 is greater than an outer diameter of each of the first outer diameter portion 31 and the third outer diameter portion 33, so that the second outer diameter portion 32 protrudes radially from the first outer diameter portion 31 and the third outer diameter portion 33. That is, the second outer diameter portion 32 functions as an annular protrusion disposed around an outer circumferential surface of the connector 3. An annular step 34 is formed on a side face of the annular protrusion facing the first outer diameter portion 31. An end face of the liquid sight glass adapter 1 abuts against the annular step 34 when the liquid sight glass adapter 1 is connected to the connector 3. Specifically, the end face of the liquid sight glass adapter 1 is parallel to a surface where the annular step 34 is located, which is beneficial to improving a sealing performance of the connection between the liquid sight glass adapter 1 and the connector 3.

A first sealing ring 2 is provided between the liquid sight glass adapter 1 and the annular step 34 to form a first sealing structure, which may further improve the sealing performance of the connection between the liquid sight glass adapter 1 and the connector 3. In addition, the first sealing structure may also be a sealing tape provided between the first external thread and the first internal thread.

As shown in FIG. 1 and FIG. 3, the second outer diameter portion 32 is provided with a plurality of grooves, which are arranged circumferentially around the second outer diameter portion 32. Each of the grooves extends in an axial direction of the second outer diameter portion 32, so that an outer periphery of the second outer diameter portion 32 forms an anti-slip pattern, which is convenient for the operator to twist the connector 3, so as to realize the assembly and disassembly of the liquid sight glass adapter 1 and the connector 3.

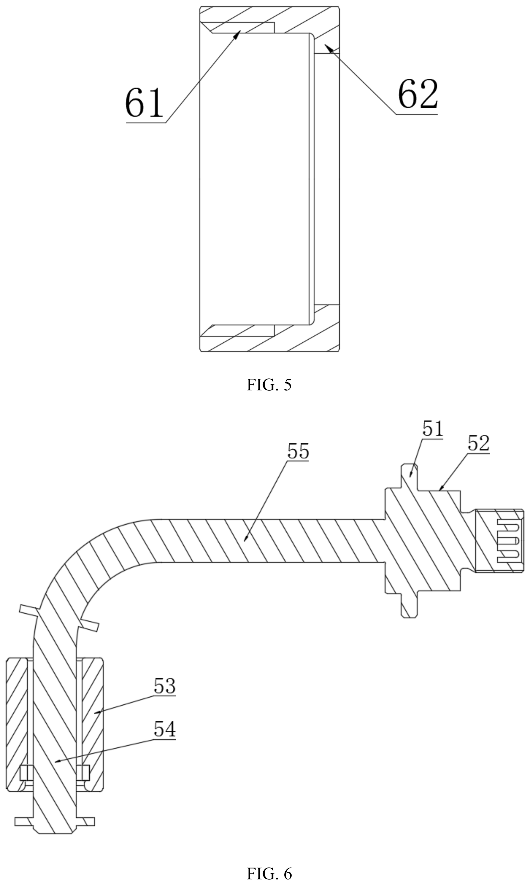

As shown in FIG. 5, the locking fastener 6 comprises a first inner diameter portion 61 and a second inner diameter portion 62, which are axially arranged. The first inner diameter portion 61 is provided with a second internal thread, and the third outer diameter portion 33 of the connector 3 is provided with a second external thread. The second external thread is matched with the second internal thread, so that the locking fastener 6 and the connector 3 are threadedly connected with each other through the second external thread and the second internal thread, thereby realizing a detachable connection between the connector 3 and the locking fastener 6, which has advantages of simple assembly and disassembly, as well as time and labor saving.

An inner diameter of the first inner diameter portion 61 is greater than an inner diameter of the second inner diameter portion 62, so that the second inner diameter portion 62 is radially recessed relative to the first inner diameter portion 61. That is, the second inner diameter portion 62 is an annular inner edge disposed around an inner circumferential surface of the locking fastener 6. During the threaded connection between the locking fastener 6 and the connector 3, an end face of the connector 3 (i.e., an end face of the third outer diameter portion 33 locating away from the second outer diameter portion 32) and the annular inner edge gradually approach each other, and therefore may respectively abut against two opposite axial sides of an annular boss 51 of the oil level sensor 5. That is, the connector 3 and the locking fastener 6 clamp the annular boss 51 between them. In this way, through the connection between the locking fastener 6 and the connector 3, an installation and a fixation of the oil level sensor may be realized, which is simple in operation, saves time and labor, and is beneficial to rapid assembly and disassembly of the oil level sensor 5.

Two opposite axial side faces of the annular boss 51 are parallel to the end face of the third outer diameter portion 33 and an end face of the second inner diameter portion 62, respectively. For example, the above four faces (i.e., the two opposite axial side faces and the two end faces) are parallel with one another, so that the annular boss 51 is in close contact with the end face of the third outer diameter portion 33, and the annular boss 51 is in close contact with the end face of the second inner diameter portion 62, thereby improving a sealing performance of the connection between the connector 3 and the locking fastener 6.

A second sealing ring 4 is provided between the end face of the third outer diameter portion 33 of the connector 3 and the annular boss 51 to form a second sealing structure. By improving a sealing performance between the connector 3 and the oil level sensor 5, the sealing performance of the connection between the connector 3 and the locking fastener 6 may be further improved. In addition, the second sealing structure may further comprise a third sealing ring disposed between the annular boss 51 and the second inner diameter portion 62. By improving a sealing performance between the locking fastener 6 and the oil level sensor 5, the sealing performance of the connection between the connector 3 and the locking fastener 6 may be further improved.

As shown in FIG. 1 and FIG. 3, an outer periphery of the locking fastener 6 is configured as an external hexagonal structure, which is convenient for the operator to twist the locking fastener 6, so as to realize rapid assembly and disassembly of the locking fastener 6 and the connector 3.

It should be noted that the annular boss 51 is a part of the oil level sensor and is used to realize an installation and fixation of the oil level sensor 5. The annular boss 51 may be added to the oil level sensor 5 in the prior art using a prior art design of the oil level sensor 5, which will not be limited here.

Embodiments of the present disclosure provide a compressor, comprising a compressor shell, an oil level sensor 5, and a connection assembly. The connection assembly is the connection assembly in the above-mentioned embodiments. The oil level sensor 5 may be installed onto the compressor shell through the connection assembly.

The compressor further comprises an oil sump disposed at a lower portion of the compressor shell. The oil level sensor 5 extends into the compressor shell and is used to detect an oil level of oil in the oil sump.

As shown in FIG. 6, the oil level sensor 5 comprises a tubular element and a floating element 53. The tubular element is fixed to the compressor shell and at least partially disposed inside the compressor shell. The floating element 53 is disposed inside the compressor shell, surrounds the tubular element, and may float on the oil contained in the oil sump. The tubular element comprises a first tubular portion 54, a second tubular portion 55, and an arcuate connection portion. The first tubular portion 54 has a first longitudinal axis, and the second tubular portion 55 has a second longitudinal axis, wherein the first longitudinal axis is perpendicular to the second longitudinal axis. The arcuate connection portion connects the first tubular portion 54 to the second tubular portion 55. During use, the first tubular portion 54 is vertically disposed and at least partially submerged in the oil sump, while the second tubular portion 55 is horizontally disposed and fixed onto the compressor shell via the connection assembly. The floating element 53 is disposed around an outer periphery of the first tubular portion 54 and may slide in a vertical direction relative to the first tubular portion 54.

The second tubular portion 55 of the oil level sensor 5 is provided with a mounting adapter at a position locating away from the first tubular portion 54. An outer diameter of the mounting adapter is greater than an outer diameter of the second tubular portion 55, so that the mounting adapter protrudes from the second tubular portion 55, which is beneficial to improving a stability of installation. The annular boss 51 in the above-mentioned embodiments is disposed in the middle of an outer circumferential surface of the mounting adapter. An outer diameter of the annular boss 51 is greater than an outer diameter of the mounting adapter, so that the annular boss 51 protrudes relative to the outer circumferential surface of the mounting adapter and divides the outer circumferential surface of the mounting adapter into a first outer circumferential surface and a second outer circumferential surface that are respectively located on the two opposite axial sides of the annular boss 51. The first outer circumferential surface is located closer to the first tubular portion 54 than the second outer circumferential surface, and an outer diameter of the first outer circumferential surface is less than an inner diameter of the connector 3, so that the connector 3 may be sleeved on the outer periphery of the first outer circumferential surface; an outer diameter of the second outer circumferential surface is less than the inner diameter of the second inner diameter portion 62 of the locking fastener 6, so that the second inner diameter portion 62 may be sleeved on the outer periphery of the second outer circumferential surface; the outer diameter of the annular boss 51 is less than the inner diameter of the first inner diameter portion 61 of the locking fastener 6, so that the first inner diameter portion 61 may be sleeved on an outer periphery of the annular boss 51, which thereby is beneficial for the connector 3 and the locking fastener 6 to abut against the two opposite axial sides of the annular boss 51, respectively.

As shown in FIG. 1 to FIG. 3, a calibration plane 52 is provided on the second outer circumferential surface of the mounting adapter. The calibration plane 52 is either perpendicular or parallel to a sliding path of the floating element 53. That is, the calibration plane 52 is either perpendicular or parallel to an extension direction (a first longitudinal axis) of the first tubular portion 54. In this way, when the oil level sensor 5 is installed, an angle of the first tubular portion 54 (a floating path of the floating element 53) relative to the compressor shell may be determined based on an angle of the calibration plane 52 relative to the compressor shell, which is beneficial to improving an installation precision and accuracy of the oil level sensor 5 and improving a detection precision. For example, during the installation, the first tubular portion 54 (the floating path of the floating element 53) may be perpendicular to a plane where a base of the compressor shell is located by keeping the calibration plane 52 parallel to the plane where the base is located.

In the specific solution, two calibration planes 52 may be provided, and both of them are maintained parallel to the sliding path of the floating element 53.

The basic principles of the present disclosure have been described above in combination with specific embodiments. However, it should be noted that the advantages, benefits, effects, etc., mentioned in the present disclosure are merely exemplary and are not for limitation, and it may not be considered that these advantages, benefits, effects, etc., are indispensable for embodiments of the present disclosure. Furthermore, the specific details disclosed above are only for the purpose of illustration and ease of understanding, and are not for limitation, and these details do not limit that the present disclosure must be implemented using the above-mentioned specific details.

The block diagrams of the devices, apparatuses, equipment, and systems involved in the present disclosure are only illustrative examples and are not intended to require or imply that they must be connected, arranged, or configured in the manner shown in the block diagrams. As those skilled in the art will recognize, these devices, apparatuses, equipment, and systems may be connected, arranged, and configured in any manner. Terms such as "comprising", "containing", "having", etc., are open-ended terms, which mean "comprising but not limited to" and may be used interchangeably. Terms "or" and "and" as used herein refer to a term "and/or" and may be used interchangeably, unless the context clearly indicates otherwise. A term "such as" as used herein refers to a phrase "such as but not limited to" and may be used interchangeably.

It should be understood that determiners "first", "second", "third", "fourth", "fifth", and "sixth" used in the descriptions of embodiments of the present disclosure are only for clarifying the technical solutions more clearly and are not intended to limit the scope of protection of the present disclosure.

The above-mentioned descriptions have been provided for the purposes of illustration and description. In addition, the descriptions are not intended to limit embodiments of the present disclosure to the form disclosed herein. Although various example aspects and embodiments have been discussed above, those skilled in the art will recognize certain variations, modifications, changes, additions, and sub-combinations thereof.

## Claims

1. A connection assembly for connecting a compressor shell with an oil level sensor, **characterizing by** comprising:
a liquid sight glass adapter fixed on the compressor shell;
a connector and a locking fastener, wherein a first end of the connector is detachably connected to the liquid sight glass adapter, a second end of the connector is detachably connected to the locking fastener, and the connector and the locking fastener respectively abut against two opposite axial sides of an annular boss disposed around an outer periphery of the oil level sensor,
wherein, the liquid sight glass adapter, the connector and the locking fastener are configured to allow the oil level sensor to pass therethrough.

2. The connection assembly according to claim 1, **characterized in that** the liquid sight glass adapter has a first internal thread, the first end of the connector is provided with a first external thread, and the first internal thread is matched with the first external thread, so that the liquid sight glass adapter is threadedly connected to the connector.

3. The connection assembly according to claim 1, **characterized in that** a first sealing structure is provided between the liquid sight glass adapter and the connector.

4. The connection assembly according to claim 3, **characterized in that** an annular step facing the liquid sight glass adapter is provided on an outer periphery of the connector, and the first sealing structure comprises a first sealing ring abutting between the liquid sight glass adapter and the annular step.

5. The connection assembly according to claim 1, **characterized in that** the second end of the connector is provided with a second external thread, the locking fastener is provided with a second internal thread, and the second external thread is matched with the second internal thread, so that the connector is threadedly connected to the locking fastener.

6. The connection assembly according to claim 1, **characterized in that** an annular inner edge is provided around an inner circumferential surface of the locking fastener, and the second end of the connector and the annular inner edge are configured to clamp the annular boss of the oil level sensor between them when the connector is connected to the locking fastener.

7. The connection assembly according to claim 6, **characterized in that** a second sealing structure is provided between the connector and the annular boss of the oil level sensor, and/or between the annular boss and the annular inner edge.

8. A compressor, **characterizing by** comprising a compressor shell, an oil level sensor and the connection assembly according to any one of claims 1 to 7.

9. The compressor according to claim 8, **characterized in that** the oil level sensor has a mounting adapter, the annular boss is disposed around an outer circumferential surface of the mounting adapter, an outer diameter of the annular boss is greater than an inner diameter of each of the connector and the annular inner edge, and less than an inner diameter of the locking fastener.

10. The compressor according to claim 9, **characterized in that** the oil level sensor comprises a tubular element and a floating element, the tubular element is fixed to the compressor shell and at least partially disposed inside the compressor shell, the floating element is disposed inside the compressor shell and surrounds the tubular element, a calibration plane is provided on an outer periphery of the mounting adapter protruding from the locking fastener, and the calibration plane is perpendicular or parallel to a movement path of the floating element of the oil level sensor.
